# EUROPÄISCHE PATENTSCHRIFT

(11) **EP 1 532 900 B1**
(45) Veröffentlichungstag und Bekanntmachung des Hinweises auf die Patenterteilung: **31.03.2010**
(21) Anmeldenummer: 03026388.3
(22) Anmeldetag: 18.11.2003
(51) Int. Cl.: A47C 23/00

(54) **Auflagerelement**
Support element
Elément de support

(43) Veröffentlichungstag der Anmeldung: 25.05.2005
(73) Patentinhaber: Spiroplex GmbH, 33415 Verl (DE)
(72) Erfinder: Bock, Ernst, 33415 Verl (DE)
(74) Vertreter: Stenger, Watzke & Ring

(56) Entgegenhaltungen:
- EP-A- 0 996 349
- EP-A- 1 082 926
- WO-A-01/50923
- WO-A-99/07259
- DE-C- 67 765
- DE-C- 104 447
- US-A- 106 069
- US-A- 5 588 165

## Beschreibung

Die Erfindung betrifft ein Auflagerelement, aufweisend eine Kopfplatte und ein daran angeordnetes Federelement, wobei das Federelement wendelförmig und von der Kopfplatte ausgehend nach Art eines Kegels verjüngt ausgebildet ist, wobei die Kopfplatte aus Kunststoff gebildet ist, wobei das Federelement aus Kunststoff gebildet ist und wobei das Federelement mehrzügig ausgebildet ist.

Auflagerelemente als solche sind aus dem Stand der Technik an sich bekannt. Sie dienen der federnden Aufnahme von Matratzen, Polster oder dergleichen, wobei sie zur Abstützung beispielsweise einer Matratze über eine matratzenseitig angeordnete Kopfplatte verfügen. Auf der der Matratze abgewandten Seite der Kopfplatte ist ein an der Kopfplatte angeordnetes Federelement vorgesehen, das sich seinerseits an einem Traggerüst abstützt.

Bekannt geworden ist ein Auflagerelement beispielsweise aus der europäischen Patentschrift EP 0 996 349 B1. Das hier beschriebene Auflagerelement ist als Spritzgußteil ausgebildet und verfügt über einen einstückig mit dem Federelement ausgebildeten Auflageteller. Das Federelement ist als Blattfeder ausgebildet und weist von einem Basiskörper ausgehend mit dem Auflageteller verbundene Auflagearme auf, die ausgehend vom Basiskörper nach außen gerichtet, rotationssymmetrisch im Winkelabstand von 120° bis 90° am Basiskörper angeordnet sind. Um einem ungewünschten Einfedern einzelner Auflagerarme entgegenwirken zu können, verfügen die Auflagerarme über jeweils gleiche Federkonstanten.

Bedingt durch den komplizierten Aufbau ist das aus der EP 0 996 349 B1 vorbekannte Auflagerelement in seiner Herstellung in nachteiliger Weise sehr kostenaufwendig. Zudem kann es infolge einer Ungleichbelastung des Auflagetellers zu einer Überbelastung einzelner Auflagerarme kommen, was in nachteiliger Weise zu einem Funktionsausfall des gesamten Auflagerelements führen kann.

Ein gattungsgemäßes Auflagerelement ist aus der DE-A-20 15 659 bekannt. Es wird hier eine Federeinlage insbesondere für Matratzen beschrieben, die aus einer Mehrzahl von gattungsgemäßen Auflagerelementen gebildet ist. Dabei stellt die hier beschriebene Federeinlage ein einheitliches, zusammenhängendes, mit einzelnen Federelementen ausgestattetes Gebilde dar, das ohne weitere Bearbeitung zur Ausstattung von Polstermöbeln oder zur Verwendung als Matratze dienen kann. Eine individuelle Verwendung der die Federeinlage bildenden Auflagerelemente ist weder gewünscht noch vorgesehen.

Ausgehend vom vorbeschriebenen Stand der Technik ist es **Aufgabe** der Erfindung, unter Vermeidung der vorgenannten Nachteile ein Auflagerelement zu schaffen, das bei einem gleichzeitig einfachen und damit in der Herstellung kostengünstigen Aufbau eine auch im Dauerbetrieb zuverlässige Verwendung ermöglicht.

**Gelöst** wird diese Aufgabe durch ein Auflagerelement, das dadurch gekennzeichnet ist, daß das Federelement auswechselbar an der Kopfplatte angeordnet ist.

Das erfindungsgemäße Auflagerelement verfügt über ein an einer Kopfplatte angeordnetes Federelement, welches wendelförmig und hinsichtlich seiner Querschnittsfläche verjüngt ausgebildet ist, wobei sich die Verjüngung ausgehend von der Kopfplatte nach Art eines Kegels zur Auflagerfläche entfernten Seite hin erstreckt. Die erfindungsgemäße Ausgestaltung des Auflagerelements zeichnet sich durch ihren einfachen Aufbau aus. Die Herstellkosten können hierdurch bedingt auf ein Minimum reduziert werden. Darüber hinaus ist von besonderem Vorteil, daß das Federelement aufgrund seines Aufbaus auch einer ungleichmäßigen Kraftbeaufschlagung des Auflagerelements sicher Stand hält. Das erfindungsgemäße Auflagerelement eignet sich damit insbesondere auch als Unterlage für Bettmatratzen, denn es kommt auch infolge einer Dauerbelegung des Bettes, wie dies beispielsweise in Kranken- oder Pflegebereichen der Fall sein kann, nicht zu einem einseitigen Funktionsausfall, wie dies in nachteiliger Weise bei den aus dem Stand der Technik bekannten Blattfederarmen auftreten kann. Im Unterschied zu den vorbekannten Auflagerelementen zeichnet sich das erfindungsgemäße Auflagerelement mithin durch seine Funktionssicherheit aus.

Auch läßt sich das erfindungsgemäße Auflagerelement sehr viel einfacher als das aus dem Stand der Technik vorbekannte Auflagerelement reinigen, was insbesondere bei einer Verwendung des Auflagerelements im Kranken- und/oder Pflegebereich von Vorteil ist.

Gemäß einem weiteren Merkmal der Erfindung ist vorgesehen, daß das Federelement mehrzügig, vorzugsweise zwei-, drei- oder vierzügig ausgebildet ist. Erreicht wird durch die mehrzügige Ausbildung des Federelements eine verbesserte Formstabilität des gesamten Auflagerelements. Dabei werden vorzugsweise sämtliche Züge des Federelements durch nur eine Aufnahme an der Kopfplatte des Auflagerelements angeordnet, so daß auch bei einer ungleichmäßigen, das heißt einseitigen Kraftbeaufschlagung der Kopfplatte eine Krafteinleitung in sämtliche Züge des Federelements erfolgen kann. Der Überbeanspruchung einzelner Züge des Federelements wird so sicher entgegengewirkt. Die Ausbildung mehrerer Federelementezüge hat darüber hinaus den Vorteil, daß die auf das Auflagerelement insgesamt einwirkende Auflagerkraft der Anzahl der verwendeten Federelementezüge entsprechend aufgeteilt in die das Auflagerelement tragende Struktur abgeleitet werden kann.

Erfindungsgemäß ist das Federelement austauschbar an der Kopfplatte angeordnet. Kopfplatte und Federelement können so beispielsweise zu Reinigungszwecken voneinander getrennt werden. Zudem hat die zweiteilige Ausgestaltung von Federelement einerseits und Kopfplatte andererseits den Vorteil, daß sie aus unterschiedlichen Materialien gefertigt sein können, was nicht nur aus Kostengründen von Vorteil ist, auch kann so den unterschiedlichen Funktionsanforderungen von Federelement einerseits und Kopfplatte andererseits durch geeignete Materialwahl Rechnung getragen werden. Von besonderem Vorteil ist dabei in diesem Zusammenhang, daß beispielsweise in ihrer Größe unterschiedlich ausgebildete Kopfplatten mit beispielsweise hinsichtlich ihrer Federkonstante, ihrer Federkraft oder ihres Federweges unterschiedlich ausgebildeten Federelementen nach dem Baukastenprinzip miteinander kombiniert werden können. Trotz geringer Herstellkosten können so individuelle Einstellungswünsche berücksichtigt werden.

Gemäß einem weiteren Vorschlag der Erfindung ist vorgesehen, daß das Federelement verdrehsicher an der Kopfplatte angeordnet ist. Unterbunden wird so in vorteilhafter Weise eine ungewünschte Verdrehung von Federelement einerseits und Kopfplatte andererseits.

Gemäß einem weiteren Merkmal der Erfindung ist das Federelement aus Kunststoff oder Metall gebildet. Dabei ist es insbesondere aus Kostengründen von Vorteil, das Federelement als Spritzgußteil aus Kunststoff zu bilden.

Gemäß einem weiteren Merkmal der Erfindung weist die Kopfplatte beispielsweise in Form von Langlöchern Durchbrüche auf. Hierdurch bedingt ergibt sich infolge der Materialeinsparung nicht nur eine Gewichtsreduzierung, auch trägt die Ausbildung von Durchbrüchen zu einer verbesserten Formstabilität der Kopfplatte bei. Darüber hinaus dienen die Durchbrüche als Luftdurchlässe zur Be- bzw. Entlüftung der kopfplattenseitig vom Auflagerelement getragenen Auflage, beispielsweise der Matratze, des Polsters oder dergleichen. Aus Kostengründen wird zudem vorgeschlagen, die Kopfplatte als Spritzgußteil aus Kunststoff zu bilden.

Gemäß einem weiteren Merkmal der Erfindung weist das Auflagerelement ein Verbindungselement auf, das zur Befestigung des Federelements an einer Trägerplatte der Kopfplatte gegenüberliegend am Federelement angeordnet ist. Das Verbindungselement dient mithin als Verbindungsglied zwischen dem die Kopfplatte tragenden Federelement einerseits und der das Auflagerelement aufnehmenden Trägerplatte andererseits.

Federelement und Verbindungselement können gemäß einem ersten Vorschlag der Erfindung einstückig ausgebildet sein. Insbesondere aus Kostengründen kann eine solche Ausgestaltung von Vorteil sein.

Gemäß einem alternativen Vorschlag der Erfindung ist vorgesehen, daß das Verbindungselement ein separates Bauteil ist, das auswechselbar am Federelement angeordnet ist. Die zweiteilige Ausgestaltung von Verbindungselement einerseits und Federelement andererseits hat den Vorteil, daß entsprechend den jeweils zu fordernden Materialeigenschaften das Verbindungselement und das Federelement aus unterschiedlichen Materialien gebildet sein können. Zur Anordnung des Auflagerelements an der Trägerplatte dient bei einer zweiteiligen Ausgestaltung von Verbindungselement und Federelement das Verbindungselement als Zwischenglied zwischen Federelement und Trägerplatte. Dabei ist das Verbindungselement vorzugsweise auswechselbar sowohl am Federelement als auch an der Trägerplatte angeordnet. Zu Reinigungszwecken kann so das Federelement vom Verbindungselement als auch das Verbindungselement von der Trägerplatte getrennt werden. Um eine ungewünschte Verdrehbewegung des Auflagerelements gegenüber der Trägerplatte zu verhindern, ist das Auflagerelement verdrehsicher an der Trägerplatte angeordnet, zu welchem Zweck das Verbindungselement sowohl am Federelement als auch an der Trägerplatte verdrehsicher angeordnet ist.

Gemäß einem weiteren Merkmal der Erfindung ist das Verbindungselement nach Art eines Stopfens ausgebildet und besteht aus einem vorzugsweise thermoplastischen Kunststoff. Eine derartige Ausgestaltung hat den Vorteil, daß das Verbindungselement abdichtend in eine korrespondierende Aufnahme der Trägerplatte eingesteckt werden kann. Zudem kann das Verbindungselement aufgrund der Materialelastizität des thermoplastischen Kunststoffes ohne weitere Befestigungsmittel, wie beispielsweise Gewinde oder dergleichen, lagesicher in die korrespondierend an der Trägerplatte ausgebildete Aufnahme eingesteckt werden. Ohne die Hinzunahme eines Werkzeuges kann das Verbindungselement somit von der Trägerplatte gelöst bzw. an dieser angeordnet werden. Darüber hinaus ist das Verbindungselement auch bei unter Umständen auftretenden Erschütterungen geräuschgedämmt an der Trägerplatte angeordnet.

Vorgeschlagen wird mit der Erfindung des weiteren eine Trägerplatte zur Anordnung eines Auflagerelements gemäß vorstehender Beschreibung, wobei vorgesehen ist, daß die Trägerplatte eine zum Verbindungselement des Auflagerelements korrespondierend ausgebildete Aufnahme aufweist. Zwecks Verdrehsicherung kann dabei vorgesehen sein, daß das Verbindungselement hinsichtlich seines Querschnittes nicht vollkreisförmig, sondern statt dessen teilkreisförmig, ellipsenförmig oder mehreckförmig ausgebildet ist. Korrespondierend zum Querschnitt des Verbindungselements ist die in der Trägerplatte vorgesehene Aufnahme ausgebildet.

Gemäß einem weiteren Merkmal der Erfindung verfügt die Trägerplatte über eine Mehrzahl von vorzugsweise reihenförmig angeordneten Aufnahmen. Dies ermöglicht die Anordnung einer Mehrzahl von Auflagerelementen an der Trägerplatte. Je nach Größe der Trägerplatte können so eine Vielzahl von Auflagerelementen an der Trägerplatte vorzugsweise reihenförmig angeordnet werden. Aus Reinigungs- und Gewichtsgründen ist die Trägerplatte vorzugsweise aus Kunststoff gebildet.

Vorgeschlagen mit der Erfindung wird des weiteren ein Bett, insbesondere ein Kranken- und/oder Pflegebett, aufweisend eine aus einer Trägerplatte gemäß vorstehender Beschreibung gebildete Liegefläche. Bestückt ist die Trägerplatte matratzenseitig mit einer Mehrzahl von Auflagerelementen gemäß der vorbeschriebenen Art, wobei gemäß einem besonderen Merkmal der Erfindung vorgesehen sein kann, daß das Bett über eine Mehrzahl von vorzugsweise relativ zueinander bewegbar angeordneten Trägerplatten verfügt. Auch kann natürlich eine mit Auflagerelementen bestückte Trägerplatte als Liegefläche bzw. Unterlage für andere Möbelstücke, wie z. B. Liegen, Massageunterlagen oder dergleichen, genutzt werden.

Wie vorstehend beschrieben sind die erfindungsgemäßen Auflagerelemente auswechselbar an der die Liegefläche des Bettes bildenden Trägerplatte angeordnet. Dies ermöglicht ein bedarfsweises Entfernen der Auflagerelemente insbesondere zum Zwecke der Reinigung. Auch können in vorteilhafter Weise Liegeflächenbereiche mit Zonen unterschiedlich stark federnder Auflagerelemente geschaffen werden. In Abhängigkeit der mit den verwendeten Auflagerelementen jeweils eingesetzten Federelemente können so Liegeflächenbereiche mit unterschiedlichem Federungskomfort ausgebildet werden. Insbesondere im Kranken- und/oder Pflegebereich ist dies von Vorteil, denn kann so den individuellen Wünschen des im Kranken- und/oder Pflegebett liegenden Patienten wunschgerecht entsprochen werden.

Weitere Vorteile und Merkmale der Erfindung ergeben sich aus der Beschreibung anhand der nachfolgenden Figuren. Dabei zeigen:
- Fig. 1: in einer dreidimensionalen Ansicht das erfindungsgemäße Auflagerelement;
- Fig. 2: in einer Draufsicht von oben das erfindungsgemäße Auflagerelement;
- Fig. 3: die Einzelbauteile des erfindungsgemäßen Auflagerelements;
- Fig. 4: ein an einer Trägerplatte angeordnetes Verbindungselement;
- Fig. 5: in einer Seitenansicht ein an einer Trägerplatte angeordnetes erfindungsgemäßes Auflagerelement und
- Fig. 6: in einer perspektivischen Darstellung ein an einer Trägerplatte angeordnetes erfindungsgemäßes Auflagerelement.

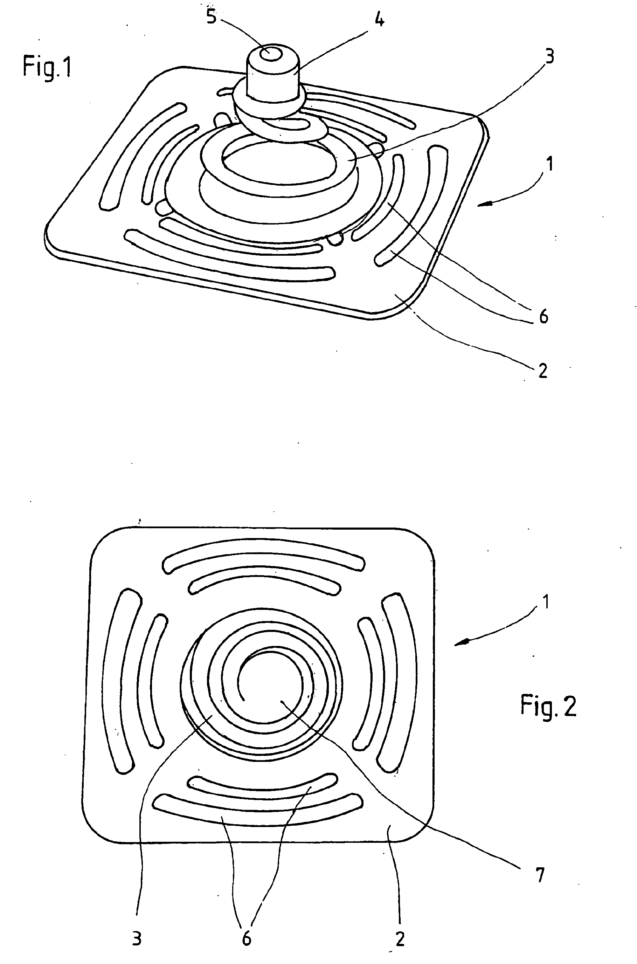

Fig. 1 zeigt in einer perspektivischen Darstellung das Auflagerelement (1) in einer Ansicht von unten. Gebildet ist das Auflagerelement aus einer mit Durchbrüchen (6) versehenen Kopfplatte (2), einem an der Kopfplatte (2) angeordneten Federelement (3) sowie einem Verbindungselement (4), das der Kopfplatte (2) gegenüberliegend am Federelement (3) angeordnet ist.

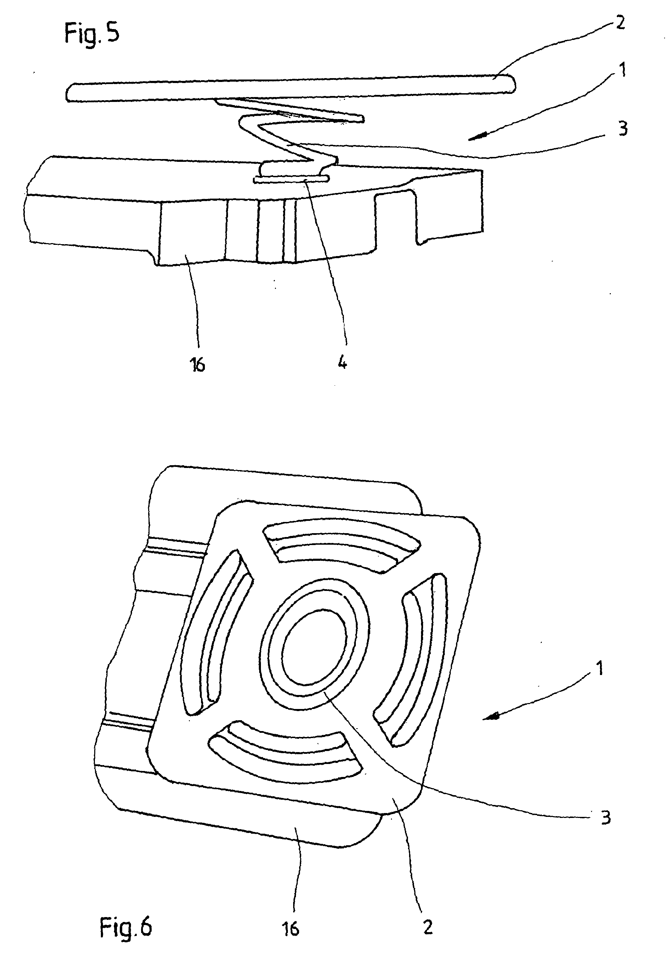

Erfindungsgemäß ist das Federelement (3) wendelförmig ausgebildet. Es erstreckt sich zwischen Kopfplatte (2) des Auflagerelements (1) einerseits und einer das Auflagerelement (1) aufnehmenden Trägerplatte (16) andererseits, wie insbesondere den Fign. 5 und 6 entnommen werden kann. Dabei ist das Federelement (3), wie insbesondere Fig. 5 zeigt, ausgehend von der Kopfplatte (2) in Richtung der Trägerplatte (16) nach Art eines Kegels in seiner Querschnittsfläche verjüngt ausgebildet. Im Bereich der Kopfplatte weist das Federelement vorzugsweise einen Durchmesser von 50 mm bis 60 mm auf.

Fig. 2 zeigt das erfindungsgemäße Auflagerelement in einer Draufsicht von oben. Deutlich zu erkennen sind hier die in der Kopfplatte (2) ausgebildeten Durchbrüche (6), die insbesondere der Be- und Entlüftung der im betriebsfertigen Zustand auf einem Auflagerelement (1) aufgelegten Auflage, beispielsweise einer Matratze, dienen.

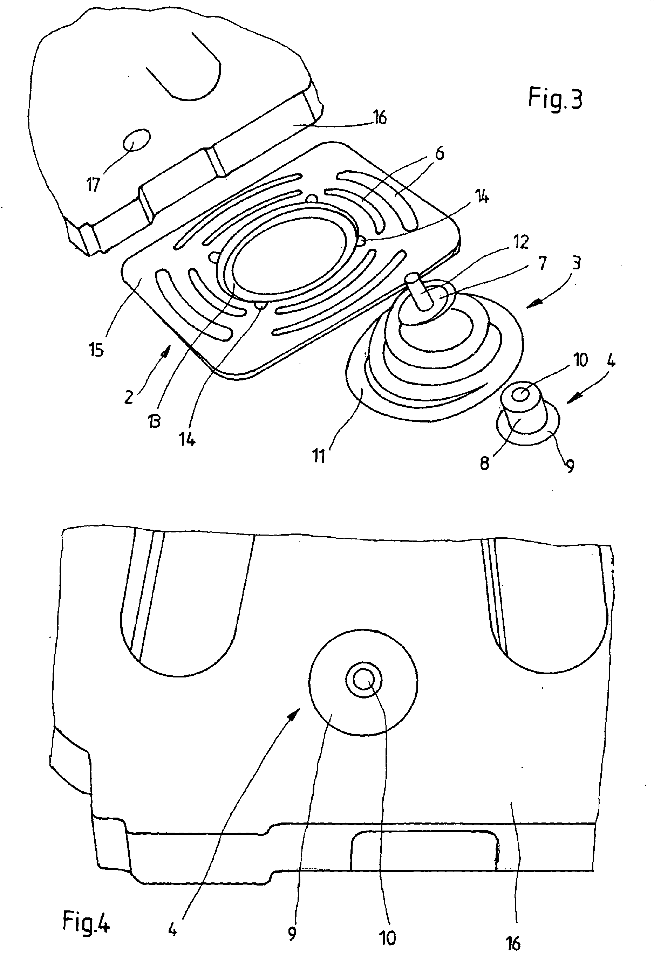

Die einzelnen Baubestandteile des erfindungsgemäßen Auflagerelements (1) sind in Fig. 3 dargestellt. Zu erkennen sind hier die Kopfplatte (2), das Federelement (3) sowie das Verbindungselement (4).

Das Verbindungselement (4) ist nach Art eines Stopfens ausgebildet und weist einen Grundkörper (8) sowie einen daran angeordneten, umlaufenden Rand (9) auf. Zur auswechselbaren Anordnung des Auflagerelements (1) an einer Trägerplatte (16) kann das Verbindungselement (4) auswechselbar in eine korrespondierend in der Trägerplatte (16) ausgebildete Aufnahme (17) eingesteckt werden. Dabei dient der Rand (9) des Verbindungselements (4), wie insbesondere Fig. 4 entnommen werden kann, der Abstützung des Verbindungselements (4) gegenüber der Trägerplatte (16).

Das Verbindungselement (4) verfügt des weiteren über eine Bohrung (10), in die hinein das kopfplattenferne Ende des Federelements (3) vorzugweise austauschbar eingeführt werden kann. Um eine verdrehsichere Anordnung des Auflagerelements (1) gegenüber der Trägerplatte (16) sicherzustellen, ist sowohl das Verbindungselement (4) am Federelement (3) als auch an der Trägerplatte (16) verdrehsicher angeordnet.

Das Federelement (3) besteht aus einem wendelförmig ausgebildeten Federkörper (11), einem Basisteil (7) sowie einem am Basisteil (7) angeordneten Stift (12), der korrespondierend zur Bohrung (10) des Verbindungselementes ausgebildet ist. Im montierten Zustand stützt sich das Basisteil (7) des Federelements (3) auf dem Verbindungselement (4) ab, wie insbesondere Fig. 5 entnommen werden kann.

Die Kopfplatte (2) besteht aus einem vorzugsweise als Spritzgußteil ausgebildeten Formelement (15). Auf der der Auflage abgewandten Seite des Formelements (15) ist zur verdrehsicheren Anordnung des Federelements (3) an der Kopfplatte (2) eine Aufnahme (13) vorgesehen. Die Aufnahme (13) ist in ihrer Größe derart bemessen, daß sie den letzten Wendelgang des Federkörpers (11) des Federelements (3) vollständig aufnimmt. Auf diese Weise kann eine gleichförmige Krafteinleitung über die Kopfplatte (2) in das Federelement (3) sichergestellt werden. Zur Festlegung des Federelements (3) gegenüber der Kopfplatte (2) kann die Aufnahme (13) über Verbindungseinrichtungen (14) verfügen. Dabei sind die Verbindungseinrichtungen vorzugsweise derart ausgebildet, daß eine auswechselbare Anordnung von Kopfplatte (2) einerseits und Federelement (3) andererseits möglich ist. Beispielsweise können die Verbindungseinrichtungen als Rast- oder Clipeinrichtungen ausgebildet sein.

Wie schon vorstehend beschrieben, ist in Fig. 4 die Anordnung eines Verbindungselements (4) in einer Trägerplatte (16) dargestellt. Deutlich zu erkennen in Fig. 4 ist der auf der Trägerplatte (16) aufliegende Rand (9) des Verbindungselements (4). Darüber hinaus ist die Bohrung (10) des Verbindungselements (4) zu erkennen, in welche hinein der Stift (12) des Federelements (3) einzuführen ist. Fig. 1 ist die Anordnung des Verbindungselements (4) am Federelement (3) zu entnehmen, wobei gemäß der hier dargestellten Draufsicht von unten das Stiftende (5) des in der Bohrung (10) befindlichen Stiftes (12) des Federelements (3) zu erkennen ist.

Die Fign. 5 und 6 zeigen an der Trägerplatte (16) endmontiertes Auflagerelement (1). Je nach Größe der verwendeten Trägerplatte (16) kann diese mit einer Mehrzahl von Auflagerelementen (1) bestückt sein, wobei die Auflagerelemente (1) vorzugsweise reihenförmig an der Trägerplatte (16) angeordnet sind.

### Bezugszeichenliste

- 1: Auflagerelement
- 2: Kopfplatte
- 3: Federelement
- 4: Verbindungselement
- 5: Stiftende
- 6: Durchbrüche
- 7: Basisteil
- 8: Grundkörper
- 9: Rand
- 10: Bohrung
- 11: Federkörper
- 12: Stift
- 13: Aufnahme
- 14: Verbindungseinrichtung
- 15: Formelement
- 16: Trägerplatte
- 17: Aufnahme

## Patentansprüche

1. Auflagerelement, aufweisend eine Kopfplatte (2) und ein daran angeordnetes Federelement (3), wobei das Federelement (3) wendelförmig und von der Kopfplatte (2) ausgehend nach Art eines Kegels verjüngt ausgebildet ist, wobei die Kopfplatte (2) aus Kunststoff gebildet ist, wobei das Federelement (3) aus Kunststoff gebildet ist, **dadurch gekennzeichnet, daß** das Federelement (3) auswechselbar an der Kopfplatte (2) angeordnet ist.

2. Auflagerelement nach Anspruch 1, **dadurch gekennzeichnet, daß** das Federelement (3) mehrzügig, vorzugsweise zwei-, drei- oder vierzügig ausgebildet ist.

3. Auflagerelement nach Anspruch 1 oder 2, **dadurch gekennzeichnet, daß** das Federelement (3) verdrehsicher an der Kopfplatte (2) angeordnet ist.

4. Auflagerelement nach einem der vorhergehenden Ansprüche, **dadurch gekennzeichnet, daß** die Kopfplatte (2) Durchbrüche (6) aufweist.

5. Auflagerelement nach Anspruch 4, **dadurch gekennzeichnet, daß** die Durchbrüche (6) Langlöcher sind.

6. Auflagerelement nach einem der vorhergehenden Ansprüche, **gekennzeichnet durch** ein Verbindungselement (4), das zur Befestigung des Federelements (3) an einer Trägerplatte (16) der Kopfplatte (2) gegenüberliegend am Federelement (3) angeordnet ist.

7. Auflagerelement nach Anspruch 6, **dadurch gekennzeichnet, daß** Federelement (3) und Verbindungselement (4) einstückig ausgebildet sind.

8. Auflagerelement nach Anspruch 6, **dadurch gekennzeichnet, daß** das Verbindungselement (4) ein separates Bauteil ist, das auswechselbar am Federelement (3) angeordnet ist.

9. Auflagerelement nach Anspruch 8, **dadurch gekennzeichnet, daß** das Verbindungselement (4) verdrehsicher am Federelement (3) angeordnet ist.

10. Auflagerelement nach einem der vorhergehenden Ansprüche 6 bis 9, **dadurch gekennzeichnet, daß** das Verbindungselement (4) nach Art eines Stopfens ausgebildet ist.

11. Auflagerelement nach einem der vorhergehenden Ansprüche 6 bis 10, **dadurch gekennzeichnet, daß** das Verbindungselement (4) aus Kunststoff, vorzugsweise aus einem thermoplastischen Kunststoff, gebildet ist.

12. Auflagerelement nach einem der vorhergehenden Ansprüche 6 bis 11, **dadurch gekennzeichnet, daß** das Verbindungselement (4) auswechselbar an der Trägerplatte (16) anordbar ist.

13. Auflagerelement nach einem der vorhergehenden Ansprüche 6 bis 12, **dadurch gekennzeichnet, daß** das Verbindungselement (4) verdrehsicher an der Trägerplatte (16) anordbar ist.

14. Trägerplatte zur Anordnung eines Auflagerelements (1) nach einem der Ansprüche 6 bis 13, **dadurch gekennzeichnet, daß** die Trägerplatte (16) mit dem Auflagerelement (1) verbindbar ausgebildet ist, zu welchem Zweck die Trägerplatte (16) über eine zum Verbindungselement (4) des Auflagerelements (1) korrespondierend ausgebildete Aufnahme (17) verfügt und daß die Trägerplatte (16) aus Kunststoff gebildet ist.

15. Trägerplatte nach Anspruch 14, **dadurch gekennzeichnet, daß** die Aufnahme (17) ein im Querschnitt nicht vollkreisförmiger Durchbruch ist.

16. Trägerplatte nach Anspruch 14 oder 15, **gekennzeichnet durch** eine Mehrzahl von reihenförmig angeordneten Aufnahmen (17).

17. Bett, insbesondere Kranken- und/oder Pflegebett, aufweisend eine aus einer Trägerplatte (16) nach einem der Ansprüche 14 bis 16 gebildeten Liegefläche.

18. Bett nach Anspruch 17, **dadurch gekennzeichnet, daß** die Trägerplatte (16) matratzenseitig mit einer Mehrzahl von Auflagerelementen (1) nach einem der Ansprüche 6 bis 13 bestückt ist.

19. Bett nach Anspruch 17 oder 18, **gekennzeichnet durch** eine Mehrzahl von vorzugsweise relativ zueinander bewegbar angeordneten Trägerplatten (16).

## Claims

1. Support element, comprising a top plate (2) and a spring element (3) arranged thereon, the spring element (3) being configured in a helical manner and tapered in the manner of a cone starting from the top plate (2), the top plate (2) being formed from plastics material and the spring element (3) being formed from plastics material, **characterised in that** the spring element (3) is arranged in a replaceable manner on the top plate (2).

2. Support element according to Claim 1, **characterised in that** the spring element (3) is configured with multiple, preferably double, triple or quadruple windings.

3. Support element according to Claim 1 or 2, **characterised in that** the spring element (3) is arranged in a torsion-proof manner on the top plate (2).

4. Support element according to one of the preceding claims, **characterised in that** the top plate (2) has through-holes (6).

5. Support element according to Claim 4, **characterised in that** the through-holes (6) are slots.

6. Support element according to one of the preceding claims, **characterised by** a connection element (4) which is arranged on the spring element (3) opposing the top plate (2), for fastening the spring element (3) to a carrier plate (16).

7. Support element according to Claim 6, **characterised in that** the spring element (3) and connection element (4) are configured in one piece.

8. Support element according to Claim 6, **characterised in that** the connection element (4) is a separate component, which is arranged in a replaceable manner on the spring element (3).

9. Support element according to Claim 8, **characterised in that** the connection element (4) is arranged in a torsion-proof manner on the spring element (3).

10. Support element according to one of the preceding claims 6 to 9, **characterised in that** the connection element (4) is configured in the manner of a plug.

11. Support element according to one of the preceding claims 6 to 10, **characterised in that** the connection element (4) is formed from plastics material, preferably from a thermoplastic material.

12. Support element according to one of the preceding claims 6 to 11, **characterised in that** the connection element (4) may be arranged in a replaceable manner on the carrier plate (16).

13. Support element according to one of the preceding claims 6 to 12, **characterised in that** the connection element (4) may be arranged in a torsion-proof manner on the carrier plate (16).

14. Carrier plate for arranging a support element (1) according to one of Claims 6 to 13, **characterised in that** the carrier plate (16) is configured able to be connected to the support element (1), for which purpose the carrier plate (16) has a receiver (17) configured corresponding to the connection element (4) of the support element (1) and **in that** the carrier plate (16) is formed from plastics material.

15. Carrier plate according to Claim 14, **characterised in that** the receiver (17) is a through-hole which in cross section does not have a fully circular shape.

16. Carrier plate according to Claim 14 or 15, **characterised by** a plurality of receivers (17) arranged in rows.

17. Bed, in particular hospital and/or nursing care bed, comprising a reclining surface formed from a carrier plate (16) according to one of Claims 14 to 16.

18. Bed according to Claim 17, **characterised in that** the carrier plate (16) is provided on the mattress side with a plurality of support elements (1) according to one of Claims 6 to 13.

19. Bed according to Claim 17 or 18, **characterised by** a plurality of carrier plates (16) preferably arranged movably relative to one another.

## Revendications

1. Elément de support, comportant une plaque supérieure (2) et un élément faisant ressort (3) disposé sur cette dernière, l'élément faisant ressort (3) étant hélicoïdal et conçu à la manière d'un cône dont la section décroît à partir de la plaque supérieure (2), la plaque supérieure (2) étant réalisée en matière plastique, l'élément faisant ressort (3) étant réalisé en matière plastique, **caractérisé en ce que** l'élément faisant ressort (3) est disposé de manière interchangeable sur la plaque supérieure (2).

2. Elément de support selon la revendication 1, **caractérisé en ce que** l'élément faisant ressort (3) est conçu à plusieurs enroulements, de préférence à deux, à trois ou à quatre enroulements.

3. Elément de support selon la revendication 1 ou 2, **caractérisé en ce que** l'élément faisant ressort (3) est disposé de façon solidaire en rotation sur la plaque supérieure (2).

4. Elément de support selon l'une quelconque des revendications précédentes, **caractérisé en ce que** la plaque supérieure (2) comporte des ajours (6).

5. Elément de support selon la revendication 4, **caractérisé en ce que** les ajours (6) sont des trous oblongs.

6. Elément de support selon l'une quelconque des revendications précédentes, **caractérisé par** un élément de liaison (4), qui pour la fixation de l'élément faisant ressort (3) sur une plaque porteuse (16) de la plaque supérieure (2) est disposé à l'opposée sur l'élément faisant ressort (3).

7. Elément de support selon la revendication 6, **caractérisé en ce que** l'élément faisant ressort (3) et l'élément de liaison (4) sont conçus en monobloc.

8. Elément de support selon la revendication 6, **caractérisé en ce que** l'élément de liaison (4) est un composant séparé, qui est disposé de manière interchangeable sur l'élément faisant ressort (3).

9. Elément de support selon la revendication 8, **caractérisé en ce que** l'élément de liaison (4) est disposé de façon solidaire en rotation sur l'élément faisant ressort (3).

10. Elément de support selon l'une quelconque des revendications 6 à 9 précédentes, **caractérisé en ce que** l'élément de liaison (4) est conçu à la manière d'un tampon.

11. Elément de support selon l'une quelconque des revendications 6 à 10 précédentes, **caractérisé en ce que** l'élément de liaison (4) est réalisé en matière plastique, de préférence en une matière thermoplastique.

12. Elément de support selon l'une quelconque des revendications 6 à 11 précédentes, **caractérisé en ce que** l'élément de liaison (4) est susceptible d'être disposé de façon interchangeable sur la plaque porteuse (16).

13. Elément de support selon l'une quelconque des revendications 6 à 12 précédentes, **caractérisé en ce que** l'élément de liaison (4) est susceptible d'être disposé de façon solidaire en rotation sur la plaque porteuse (16).

14. Plaque porteuse destinée à être disposée sur un élément de support (1) selon l'une quelconque des revendications 6 à 13, **caractérisée en ce que** la plaque porteuse (16) est réalisée de façon à pouvoir être reliée à l'élément de support (1), à quelles fins la plaque porteuse (16) dispose d'un évidement (17) correspondant à l'élément de liaison (4) de l'élément de support (1) et **en ce que** la plaque porteuse (16) est réalisée en matière plastique.

15. Plaque porteuse selon la revendication 14, **caractérisée en ce que** le logement (17) est un ajour dont la section ne présente pas la forme d'un cercle entier.

16. Plaque porteuse selon la revendication 14 ou 15, **caractérisée par** une pluralité d'évidements (17) disposés en rangée.

17. Lit, notamment lit médicalisé et/ou lit thérapeutique, comportant une surface de couchage réalisée à partir d'une plaque porteuse (16) selon l'une quelconque des revendications 14 à 16.

18. Lit selon la revendication 17, **caractérisé en ce que** la plaque porteuse (16) est équipée côté matelas d'une pluralité d'éléments de support (1) selon l'une quelconque des revendications 6 à 13.

19. Lit selon lsa revendication 17 ou 18, **caractérisé par** une pluralité de plaques porteuses (16) de préférence mobiles les unes par rapport aux autres.
